# EUROPÄISCHE PATENTSCHRIFT

(11) **EP 0 745 779 B1**
(45) Veröffentlichungstag und Bekanntmachung des Hinweises auf die Patenterteilung: **09.08.2000**
(21) Anmeldenummer: 96201443.7
(22) Anmeldetag: 24.05.1996
(51) Int. Cl.: F16C 33/08

(54) **Verfahren zum Befestigen einer aus nicht schweissbarem Material bestehenden Achslagerbuchse in einem Loch einer metallischen Trägerplatte.**
Process for fastening a bearing made of non-weldable material in a hole of a metallic receiving plate
Procédé pour la fixation d'un palier en un matériau non soudable dans un trou d'une plaque support métallique

(30) Priorität: 03.06.1995 DE 19520474
(43) Veröffentlichungstag der Anmeldung: 04.12.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Kunze, Norbert, c/o Philips Patentverwaltung GmbH, 22335 Hamburg (DE); Müller, Dieter, c/o Philips Patentverwaltung GmbH, 22335 Hamburg (DE)
(74) Vertreter: von Laue, Hanns-Ulrich, Dipl.-Ing.

(56) Entgegenhaltungen:
- EP-A- 0 212 845
- DE-A- 4 328 211
- DE-C- 318 973
- FR-A- 2 119 461
- US-A- 3 953 089

## Beschreibung

Die Erfindung bezieht sich auf ein Verfahren zum Befestigen einer aus nicht schweißbarem Material, insbesondere Sintermetall, bestehenden Achslagerbuchse in einem Loch einer metallischen Trägerplatte und ein entsprechender Lager gemäß den Oberbegriffen der Ansprüche 1 und 5.

Ein solches Verfahren (und Lager) ist aus der US-A-3 953 089 bekannt geworden, bei dem ein Presspassung vorgenommen wird.

Eine bekannte Möglichkeit, derartige Achslagerbuchsen in einem Loch einer metallischen Trägerplatte zu befestigen, ist das Taumelnieten. Bei diesem Verfahren wird die Achslagerbuchse mittels eines Hohlnietes in der metallischen Trägerplatte befestigt. Hierzu wird zunächst die Achslagerbuchse in den innen hohlen Nietschaft eingesetzt und nachfolgend der Nietschaft mit der eingesetzten Achslagerbuchse in das Loch der metallischen Trägerplatte eingebracht. Danach wird der aus der Oberfläche der metallischen Trägerplatte herausragende Teil des Nietschaftes mittels eines Nietwerkzeuges, welches kreisförmig um den Rand des Nietschaftes wandert, zu einem Schließkopf geformt. Bei Magnetbandkassettengeräten werden derartige Achslagerbuchsen zur Lagerung der Tonachsen verwendet, welche im Zusammenspiel mit Andruckrollen aus Gummi das Magnetband am Magnetkopf des Magnetbandkassettengerätes vorbeiziehen. Für die Funktion des Magnetbandkassettengerätes ist es wichtig, daß sich die Magnetspuren des Magnetbandes stets genau über den Magnetspalten des Magnetkopfes befinden. Um dies zu gewährleisten, ist es erforderlich, daß die Tonachsen eine vorgegebene Achslage gegenüber dem Gerätechassis des Magnetbandkassettengerätes mit einer hohen Genauigkeit einnehmen und beibehalten. Entsprechend muß auch die die Tonachsen führende Achslagerbuchse die vorgegebene Achslage gegenüber dem Gerätechassis mit einer hohen Genauigkeit einnehmen und beibehalten.

Bei dem beschriebenen Verfahren des Taumelnietens kann diese exakte Achslage der Achslagerbuchse gegenüber dem Gerätechassis unter Umständen beeinträchtigt werden durch dejustierende, radiale Kräfte, welche beim kreisförmigen Wandern des Nietwerkzeuges um den Rand des Nietschaftes auf die Achslagerbuchse auftreten.

Eine weitere Möglichkeit, eine Achslagerbuchse in einer metallischen Trägerplatte zu befestigen, ist ein Klebeprozeß. Insbesondere bei extremen Temperaturschwankungen ist eine solche Klebeverbindung aber oft nicht genügend zuverlässig. Ein weiterer Nachteil des Klebeprozesses ist die relativ lange Prozeßdauer, da der Klebstoff nach seinem Einbringen für eine gewisse Zeit aushärten muß.

Durch die DE 4328211 A1 ist ein Verfahren zum Befestigen eines Gerätebauteiles , insbesondere einer Achse oder einer Lagerbuchse, in einem Loch einer metallischen Trägerplatte bekannt geworden. Diese Basisplatte ist an ihrer Oberfläche mit einer Schutzschicht versehen. Dabei werden aneinander grenzende Randbereiche des Loches und des Bauteiles mittels Laserlicht miteinander verschmolzen. Bei diesem Verfahren wird die Schutzschicht der Trägerplatte vor dem Verschmelzen durch eine mechanische Deformation im Verschmelzbereich aufgebrochen bzw. entfernt, so daß das unbedeckte Metall im Verschmelzbereich freigelegt wird.

Es ist Aufgabe der Erfindung, ein Verfahren zu schaffen, mit dem eine Achslagerbuchse aus nicht schweißbarem Material in einem Loch einer metallischen Trägerplatte in genau vorgebbarer Achslage schnell und zuverlässig befestigt werden kann.

Diese Aufgabe ist erfindungsgemäß dadurch gelöst, daß auf die Außenwandung der Achslagerbuchse eine Metallhülse festheftend aufgepreßt wird, deren Material mit der metallischen Trägerplatte verschweißbar ist, daß die mit der aufgepreßten Metallhülse versehene Achslagerbuchse in das Loch der metallischen Basisplatte eingesetzt und in der gewünschten Achslage justiert arretiert wird, und daß die Metallhülse mit der metallischen Trägerplatte verschweißt wird.

Durch das Aufpressen der Metallhülse, deren Material mit der metallischen Trägerplatte verschweißbar ist, wird der Einsatz eines Schweißverfahrens ermöglicht. Die Metallhülse kann z.B. spanabhebend oder durch Tiefziehen hergestellt werden. Während des Verschweißens der Metallhülse mit der metallischen Trägerplatte treten keine oder nur sehr geringe dejustierende Kräfte auf die Achslagerbuchse auf. Die justierte Achslage wird durch das Verschweißen nicht verändert. Gegenüber einer Befestigung der Achslagerbuchse in dem Loch der metallischen Trägerplatte mittels eines Klebeverfahrens hat das erfindungsgemäße Verfahren den Vorteil, daß die Schweißverbindung deutlich zuverlässiger ist als eine Klebeverbindung, insbesondere bei großen Temperaturschwankungen. Ein weiterer Vorteil gegenüber einem Klebeprozeß ist die geringere Prozeßdauer des Schweißens. Die nach dem Schweißen erforderliche Abkühlphase der Schweißverbindung ist deutlich kürzer als die nach dem Einbringen des Klebstoffes notwendige Aushärtphase der Klebeverbindung.

Eine vorteilhafte Ausgestaltung des Verfahrens ist dadurch gekennzeichnet, daß zum Justieren in die Achslagerbuchse ein Justierstift eingeführt wird und die gewünschte Achslage der Achslagerbuchse bezüglich der metallischen Trägerplatte durch das Ausrichten der Achslagerbuchse gegenüber dem Justierstift bewirkt wird.

Der Justierstift ist ein Hilfsmittel, um die gewünschte Achslage der Achslagerbuchse bezüglich der metallischen Trägerplatte zu realisieren. So ist z.B. eine rechnergesteuerte Positioniervorrichtung einsetzbar, welche den Justierstift und damit auch die Achslagerbuchse in einer gewünschten Achslage gegenüber der metallischen Trägerplatte ausrichtet. Ferner ist auch ein einfaches Ausrichten von Hand möglich. Der Justierstift kann beim Einführen in die Achslagerbuchse bereits ausgerichtet sein oder nachträglich zusammen mit der Achslagerbuchse ausgerichtet werden.

Eine weitere vorteilhafte Ausgestaltung des Verfahrens ist dadurch gekennzeichnet, daß die Oberfläche der metallischen Trägerplatte mit Ausnahme der Lochwandung mit einer Schutzschicht aus nicht schweißbarem Material versehen ist und daß die Randbereiche des Loches derart nach Art einer Tülle verformt werden, daß Teile der schutzschichtfreien Lochwandung beim Einsetzen der mit der aufgepreßten Metallhülse versehenen Achslagerbuchse neben der Metallhülse zu liegen kommen.

Diese Schutzschicht verhindert ein sauberes Verschweißen der metallischen Trägerplatte mit der Metallhülse. Um dennoch ein Schweißverfahren einsetzen zu können, werden die Randbereiche des Loches derart z.B. mittels eines Kaltpreßfließverfahrens verformt, daß Teile der schutzschichtfreien Lochwandung beim Einsetzen der mit der aufgepreßten Metallhülse versehen Achslagerbuchse neben der Metallhülse zu liegen kommen. Nach diesem Verformen kann das freigelegte, schutzschichtfreie Metall der Lochwandung mit der Metallhülse sauber verschweißt werden.

Eine bevorzugte Ausführungsform des Verfahrens ist dadurch gekennzeichnet, daß das Verschweißen in einfacher und zuverlässiger Weise mit einem Laserstrahl durchgeführt wird.

Mit dem erfindungsgemäßen Verfahren lassen sich entsprechende Lager herstellen, welche dadurch gekennzeichnet sind, daß auf die Außenwandung einer Achslagerbuchse aus nicht schweißbarem Material, insbesondere Sintermetall, eine Metallhülse festhaftend aufgepreßt ist, daß die mit der Metallhülse versehene Achslagerbuchse in ein Loch einer metallischen Trägerplatte in einer gewünschten Achslage eingesetzt ist und daß die Metallhülse mit der metallischen Trägerplatte in der gewünschten Achslage verschweißt ist.

Einige schematische Ausführungsbeispiele des Gegenstandes der Erfindung werden nachfolgend anhand der Zeichnung in den Fig. 1 bis 7 näher erläutert. Es zeigen:
Fig. 1 im Schnitt einen Ausschnitt aus einer metallischen Trägerplatte mit einem Loch, in dem eine Achslagerbuchse aus nicht schweißbarem Material befestigt werden soll,
Fig. 2 im Schnitt die metallische Trägerplatte, in deren Loch die mit einer Metallhülse versehene Achslagerbuchse eingeschweißt ist,
Fig. 3 eine Draufsicht auf die Unterseite der metallischen Trägerplatte gemäß Fig. 2,
Fig. 4 im Schnitt die metallische Trägerplatte gemäß Fig. 2, wobei in die Achslagerbuchse zum Justieren ein Justierstift eingeführt ist,
Fig. 5 im Schnitt als weiteres Ausführungsbeispiel die mit einer Schutzschicht versehene metallische Trägerplatte, wobei Randbereiche des Loches der metallischen Trägerplatte teilweise nach Art einer Tülle verformt sind,
Fig. 6 eine Draufsicht auf die Unterseite der metallischen Trägerplatte gemäß Fig. 5,
Fig. 7 im Schnitt die metallische Trägerplatte gemäß Fig. 5, wobei in das Loch, deren Randbereiche teilweise nach Art einer Tülle verformt sind, die mit einer Metallhülse versehene Achslagerbuchse eingeschweißt ist.

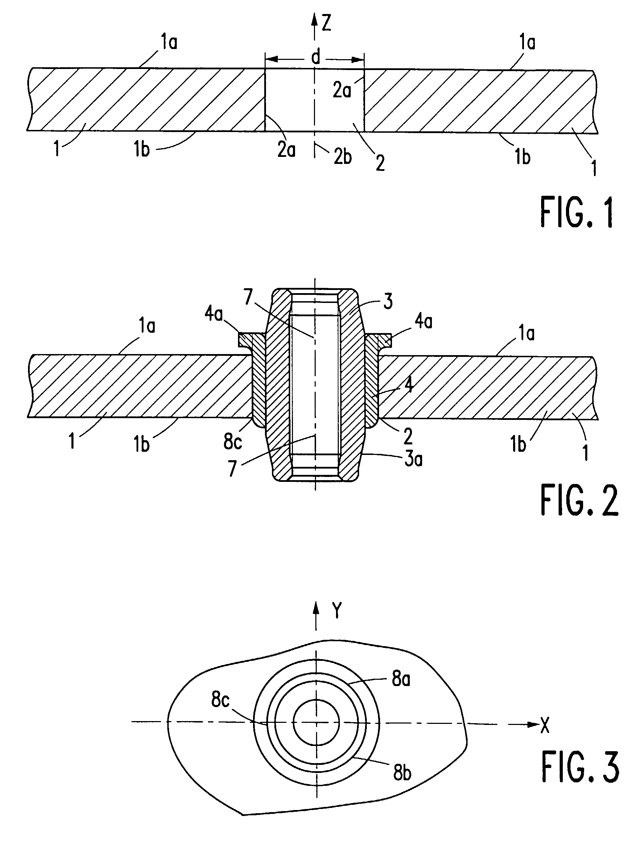

Fig. 1 zeigt einen Ausschnitt aus einer metallischen Trägerplatte 1, welche zwei Oberflächenseiten 1a und 1b sowie ein Loch 2 mit einem Durchmesser d, Lochwänden 2a und einer Mittelachse 2b aufweist. Diese metallische Trägerplatte 1 könnte z.B. eine Chassisplatte eines Magnetbandkassettengerätes sein. In dem Loch 2 soll eine in Fig. 2 erkennbare, innen hohle Achslagerbuchse 3 aus nicht schweißbarem Material, insbesondere Sintermetall, befestigt werden, wobei eine genaue Vorgabe der Mittelachse 7 der Achslagerbuchse 3 bezüglich einer X-, Y- und Z-Richtung sowie der Winkelstellung zur metallischen Trägerplatte gegeben sein soll. Die X- und Y-Richtung verläuft jeweils parallel zu der Oberfläche der metallischen Trägerplatte 1, und die Z-Richtung verläuft senkrecht zu der Oberfläche der metallischen Trägerplatte 1. In Magnetbandkassettengeräten werden derartige Achslagerbuchsen 3 verwendet, um nicht dargestellte Tonachsen zu lagern. Für die richtige Funktion eines Magnetbandkassettengerätes ist es entscheidend, daß die Tonachsen und somit auch die die Tonachsen lagernden Achslagerbuchsen in genau vorgebbarer Achslage in dem Loch 2 der metallischen Trägerplatte 1 ausgerichtet und befestigt sind. Für diese Befestigung ist der Einsatz eines Schweißverfahrens gewünscht, da dieses ein schnelles, sauberes und zuverlässiges Verfahren ist, bei dem nur geringe Kräfte auf die zu verschweißenden Teile ausgeübt werden. Da die Achslagerbuchse 3 aber aus nicht schweißbarem Material, insbesondere Sintermetall, besteht, ist ein direktes Verschweißen mit der metallischen Trägerplatte 1 nicht möglich. Erfindungsgemäß wird die Achslagerbuchse 3 aus nicht schweißbarem Material in eine Metallhülse 4 aus schweißbarem Material eingepreßt. Diese Metallhülse 4 kann z.B. spanabhebend durch Drehen oder in bevorzugter Weise durch Tiefziehen hergestellt werden. Die in Fig. 2 dargestellte Metallhülse 4 ist durch Tiefziehen hergestellt worden und weist daher einen umlaufenden Kragen 4a auf. Durch das Aufpressen der erfindungsgemäßen Metallhülse 4 läßt sich nun die mit der Metallhülse 4 versehene Achslagerbuchse 3 mit der metallischen Trägerplatte 1 verschweißen. Hierzu wird die mit der Metallhülse 4 versehene Achslagerbuchse 3 in das Loch 2 der metallischen Trägerplatte 1 eingebracht und in einer gewünschten Achslage justiert, wobei der Kragen 4a der Metallhülse 4 nicht unmittelbar auf der Oberflächenseite 1a der metallischen Trägerplatte 1 zu liegen kommt. Auf der gegenüberliegenden Seite 1b der metallischen Trägerplatte 1 wird die Metallhülse 4 nun an mindestens drei Punkten 8a bis 8c mit der metallischen Trägerplatte 1 verschweißt (siehe Fig. 3).

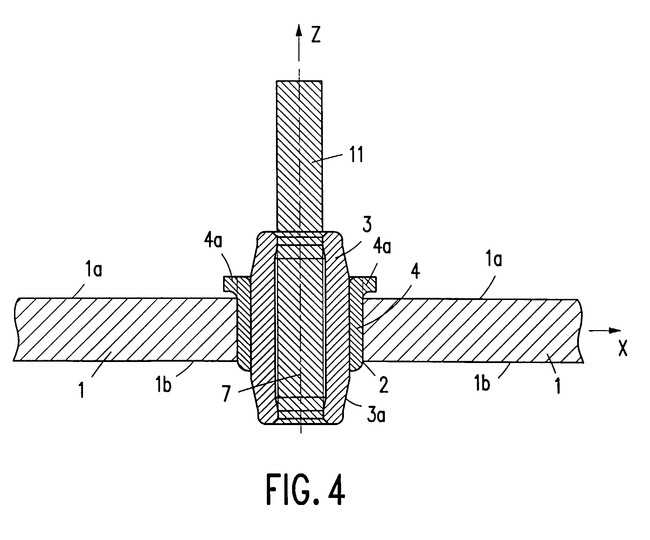

Das Ausrichten der Achslagerbuchse 3 bezüglich der metallischen Trägerplatte 1 kann vorteilhaft mittels eines in Fig. 4 dargestellten Justierstiftes 11 durchgeführt werden. Hierzu wird der Justierstift 11 zunächst in die mit der Metallhülse versehene Achslagerbuchse 3 spielarm eingesetzt. Nun wird die Achslagerbuchse 3 mittels einer seitlich auf sie einwirkenden Kraft parallel zum Justierstift ausgerichtet. Danach wird der Justierstift 11 und damit auch die mit diesem form- oder reibschlüssig verbundene Achslagerbuchse 3 gegenüber der metallischen Trägerplatte 1 ausgerichtet. Hierzu kann am Justierstift 11 z.B. eine nicht dargestellte, rechnergesteuerte Positioniervorrichtung angreifen. Es ist aber auch ein einfaches Ausrichten des Justierstiftes 11 von Hand möglich. Ebenso ist es möglich, einen feststehenden, bereits gegenüber der metallischen Trägerplatte 1 ausgerichteten Justierstift 11 zu verwenden und die Achslagerbuchse 3 mittels einer seitlich auf die Achslagerbuchse 3 wirkenden Kraft parallel zu diesem bereits ausgerichteten Justierstift 11 auszurichten.

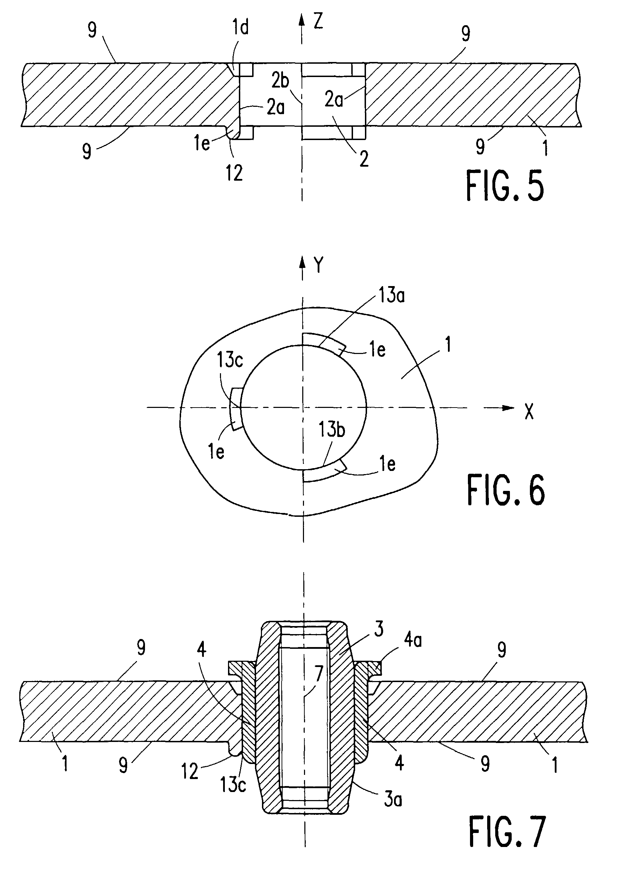

In Fig. 5 ist die metallische Trägerplatte 1 mit einer Schutzschicht 9 aus nicht schweißbarem Material, beispielsweise Zink, versehen. Um die metallische Trägerplatte 1 trotzdem mit der Metallhülse 4 verschweißen zu können, wurden die Randbereiche des Loches 2 beispielsweise mittels eines Kaltpreßfließprozesses verformt. Infolge dieses Prozesses haben sich im vorliegenden Ausführungsbeispiel im Randbereich des Loches 2 der metallischen Trägerplatte 1 gleichförmig auf dem Umfang verteilt drei Vertiefungen 1d sowie drei Stützen 1e ausgebildet. Ein Beispiel einer möglichen Verteilung der Stützen 1e und Vertiefungen 1d über dem Umfangsrand des Loches 2 ist in Fig. 6 dargestellt. Die Stützen 1e weisen Kanten 12 auf, die infolge des Verformens der Randbereiche des Loches 2 mittels des Kaltpreßfließprozesses nicht mehr mit der Schutzschicht 9 versehen sind. Nun wird die mit der Metallhülse 4 versehene Achslagerbuchse 3 in das Loch 2 der metallischen Trägerplatte 1 eingesetzt und justiert. Nachfolgend wird die Metallhülse 4 mit den schutzschichtfreien Kanten 12 der Stützen le der metallischen Trägerplatte 1 z.B. an den in Fig. 6 dargestellten drei Schweißpunkten 13a bis 13c verschweißt.

## Patentansprüche

1. Verfahren zum Befestigen einer aus nicht schweißbarem Material, insbesondere Sintermetall, bestehenden Achslagerbuchse (3) in einem Loch (2) einer metallischen Trägerplatte (1), dadurch gekennzeichnet, daß auf die Außenwandung (3a) der Achslagerbuchse (3) eine Metallhülse (4) festhaftend aufgepreßt wird, deren Material mit der metallischen Trägerplatte (1) verschweißbar ist, daß die mit der aufgepreßten Metallhülse (4) versehene Achslagerbuchse (3) in das Loch (2) der metallischen Trägerplatte (1) eingesetzt und in der gewünschten Achslage justiert arretiert wird, und daß die Metallhülse (4) mit der metallischen Trägerplatte (1) verschweißt wird.

2. Verfahren nach Anspruch 1, dadurch gekennzeichnet, daß zum Justieren in die Achslagerbuchse (3) in Achsrichtung (7) ein Justierstift (11) eingeführt wird und die gewünschte Lagerorientierung der Achslagerbuchse (3) bezüglich der metalllischen Trägerplatte (1) durch das Ausrichten der Achslagerbuchse (3) gegenüber dem Justierstift (11) bewirkt wird.

3. Verfahren nach Anspruch 1 oder 2, dadurch gekennzeichnet, daß die Oberfläche der metallischen Trägerplatte (1) mit Ausnahme der Lochwandung (2a) mit einer Schutzschicht (9) versehen ist und daß die Randbereiche des Loches (2) derart nach Art einer Tülle verformt werden, daß Teile der schutzschichtfreien Lochwandung (2a) beim Einsetzen der mit der aufgepreßten Metallhülse (4) versehenen Achslagerbuchse (3) neben der Metallhülse (4) zu liegen kommen.

4. Verfahren nach einem der Ansprüche 1 bis 3, dadurch gekennzeichnet, daß das Verschweißen mit einem Laserstrahl durchgeführt wird.

5. Lager bestehend aus einer aus nicht schweißbaren Material, insbesondere Sintermetall, bestehenden Achslagerbuchse (3) in einem Loch (2) einer metallischen Trägerplatte (1) dadurch gekennzeichnet, daß es mit einem Verfahren nach einem der Ansprüch 1 bis 4 hergestellt ist, wobei auf die Außenwandung (3a) der Achslagerbuchse (3) eine Metallhülse (4) festhaftend aufgepreßt ist, wobei die mit der Metallhülse (4) versehene Achslagerbuchse (3) in das Loch (2) der metallischen Trägerplatte (1) in einer gewünschten Achslage eingesetzt ist und wobei die Metallhülse (4) mit der metallischen Trägerplatte (1) verschweißt ist.

6. Lager nach Anspruch 5, dadurch gekennzeichnet, daß die aufgepreßte Metallhülse (4) aus Edelstahl besteht.

7. Lager nach Anspruch 5 oder 6, dadurch gekennzeichnet, daß die metallische Trägerplatte (1) aus Stahl besteht, das an seiner Oberfläche mit einer Schutzschicht (9) versehen ist.

8. Lager nach einem der Ansprüche 5 bis 7, dadurch gekennzeichnet, daß die Achslagerbuchse (3) aus Sinterbronze besteht.

## Claims

1. A method of securing a shaft-bearing bush (3) of a non-weldable material, particularly a sintered metal, in a hole (2) in a metallic mounting plate (1), characterized in that a metal sleeve (4), whose material is weldable to the metallic mounting plate (1), is securely press-fitted onto the outer wall (3a) of the shaft-bearing bush (3), the shaft-bearing bush (3) provided with the press-fitted metal sleeve (4) is introduced into the hole (2) in the metallic mounting plate (1) and is locked in the desired axial alignment, and the metal sleeve (4) is welded to the metallic mounting plate (1).

2. A method as claimed in Claim 1, characterized in that an alignment pin (11) is introduced into the shaft-bearing bush (3) for the alignment in the axial direction (7) and the desired bearing orientation of the shaft-bearing bush (3) relative to the metallic mounting plate (1) is realized by aligning the shaft-bearing bush (3) relative to the alignment pin (11).

3. A method as claimed in Claim 1 or 2, characterized in that the surface of the metallic mounting plate (1), except for the hole wall (2a), has been provided with a protective layer (9), and the peripheral areas of the hole (2) are deformed as a kind of socket in such a manner that parts of the hole wall (2a) which are free from the protective layer will adjoin the metal sleeve (4) upon introduction of the shaft-bearing bush (3) provided with the pressed-fitted metal sleeve (4).

4. A method as claimed in any one of the Claims 1 to 3, characterized in that welding is effected by means of a laser beam.

5. A bearing consisting of shaft-bearing bush (3) of a non-weldable material, particularly a sintered metal, in a hole (2) in a metallic mounting plate (1), characterized in that it has been manufactured by means of a method as claimed in any one of the Claims 1 to 4, in which method a metal sleeve (4) is press-fitted securely onto the outer wall (3a) of the shaft-bearing bush (3), the shaft-bearing bush (3) provided with the metal sleeve (4) being introduced into the hole (2) in the metallic mounting plate (1) in a desired axial alignment, and the metal sleeve (4) is welded to the metallic mounting plate (1).

6. A bearing as claimed in Claim 5, characterized in that the press-fitted metal sleeve (4) consists of high-grade steel.

7. A bearing as claimed in Claim 5 or 6, characterized in that the metallic mounting plate (1) consists of steel and its surface has been provided with a protective layer (9).

8. A bearing as claimed in any one of the Claims 5 to 7, characterized in that the shaft-bearing bush (3) consists of sintered bronze.

## Revendications

1. Procédé de fixation d'un palier (3) composé d'un matériau non soudable, en particulier d'un métal fritté, dans un trou (2) d'une plaque de support métallique (1), caractérisé en ce qu'un manchon métallique (4) dont la matière peut être soudée avec la plaque de support métallique (1) est emmanché par pression de manière fixe sur la paroi externe (3a) du palier (3), que le palier (3) muni du manchon métallique (4) emmanché par pression est inséré dans le trou (2) de la plaque de support métallique (1) et bloqué dans la position axiale souhaitée après ajustage et que le manchon métallique (4) est soudé à la plaque de support métallique (1).

2. Procédé selon la revendication 1, caractérisé en ce qu'en vue de l'ajustage dans le palier (3) en direction axiale (7), une broche d'ajustage (11) est insérée et l'orientation souhaitée du palier (3) par rapport à la plaque de support métallique (1) est assurée par l'orientation du palier (3) par rapport à la broche d'ajustage (11).

3. Procédé selon l'une des revendications 1 ou 2, caractérisé en ce que la surface de la plaque de support métallique (1) est munie d'une couche de protection (9), à l'exception de la paroi du trou (2a), et que les zones de bordure du trou (2) sont déformées à la manière d'une douille de telle manière que les parties de la paroi du trou exemptes de couche de protection (2a) viennent se placer contre le manchon métallique (4) lors de l'introduction du palier (3) muni du manchon métallique (4) emmanché par pression.

4. Procédé selon l'une des revendications 1 à 3, caractérisé en ce que le soudage est effectué à l'aide d'un rayon laser.

5. Palier composé d'un matériau non soudable, en particulier d'un métal fritté, dans un trou (2) d'une plaque de support métallique caractérisé en ce qu'il est fabriqué par un procédé selon l'une des revendications 1 à 4, qu'un manchon métallique (4) est emmanché par pression de manière rigide sur la paroi externe (3a) du palier (3), le palier (3) doté du manchon métallique étant inséré dans le trou (2) de la plaque de support métallique (1) en une position axiale souhaitée et le manchon métallique (4) étant soudé avec la plaque de support métallique (1).

6. Palier selon la revendication 5, caractérisé en ce que le manchon métallique emmanché par pression (4) se compose d'un acier spécial.

7. Palier selon l'une des revendications 5 ou 6, caractérisé en ce que la plaque de support métallique (1) se compose d'acier qui est muni à sa surface d'une couche de protection (9).

8. Palier selon l'une des revendications 5 à 7, caractérisé en ce que le palier (3) se compose de bronze fritté.
